# EUROPÄISCHE PATENTANMELDUNG

(11) **EP 1 767 716 A2**
(43) Veröffentlichungstag der Anmeldung: **28.03.2007**
(21) Anmeldenummer: 06120588.6
(22) Anmeldetag: 13.09.2006
(51) Int. Cl.: E04C 2/42, F16B 2/02

(54) **Halteelement für Gitter**

(30) Priorität: 22.09.2005 DE 102005000123
(71) Anmelder: HILTI Aktiengesellschaft, 9494 Schaan (LI)
(72) Erfinder: Foser, Thomas, 9496, Balzers (LI); Durig, Markus, 6793, Gaschurn (AT)
(74) Vertreter: Wildi, Roland

(57) **Zusammenfassung**

Die vorliegende Erfindung betrifft ein Halteelement (10) für Gitter (50), mit einem ersten Schenkel (11), dessen wenigstens eines freies Ende (13) hakenförmig ausgebildet ist, und mit einem zweiten Schenkel (12), der von dem ersten Schenkel (11) abragt und der einen Befestigungsabschnitt (20) aufweist, der eine Durchtrittsöffnung (23) für ein Befestigungselement (60), wie einen Nagel oder Bolzen aufweist.

Zur Verbesserung derartiger Halteelemente (10) weist der erste Schenkel (11) einen ersten Schenkelteil (14), der das hakenförmige Ende (13) des ersten Schenkels (11) trägt, und einen zweiten Schenkelteil (15), an dem der erste Schenkelteil (14) in Richtung einer Längsrichtung (L) des ersten Schenkels (11) teleskopierbar geführt ist, auf. Zwischen dem ersten Schenkelteil (14) und dem zweiten Schenkelteil (15) ist ferner ein Rastmechanismus (30) zum Halten des ersten Schenkelteils (14) am zweiten Schenkelteil (15) angeordnet.

## Beschreibung

Die vorliegende Erfindung betrifft ein Halteelement für Gitter, der im Oberbegriff des Patentanspruchs 1 genannten Art. Mittels derartiger Halteelemente werden Gitter oder Gitterroste an Trägern o. ä. montiert.

Aus der US 5 118 147 ist ein derartiges Halteelement bekannt, dessen hakenförmiges Ende an einem Träger angreift und an dessen dem hakenförmigen Ende abgewandten Ende eine Eingriffsstelle für eine Schraube angeordnet ist. Über die Schraube wird das Halteelement mit einem tellerförmigen Element verbunden, welches auf einem Gitterrost aufliegt, der durch ein Verspannen mit dem Halteelement an dem Träger festgelegt wird.

Von Nachteil hierbei ist, dass die Montage des Haltelementes aufwändig ist und dass eine Direktmontage des Halteelements, z. B. mittels eines handgeführten Setzgerätes, nicht möglich ist.

Aus der US 4 703 883 ist ein Halteelement bekannt, das zwei Schenkel aufweist. Der erste Schenkel weist einen U-förmigen Kanal auf, dessen Boden von einer Öffnung durchsetzt ist, die ein Befestigungsmittel hält. Der zweite Schenkel ist eben ausgebildet und weist eine zweite Öffnung auf. Dieses Haltelement kann mittels eines handgeführten Setzgerätes mit dem Schenkel, der den U-förmigen Kanal aufweist, über das Befestigungselement an einem Untergrund festgelegt werden.

Von Nachteil bei diesem Halteelement ist, dass eine Befestigung von Gitterrosten an einem Träger oder Untergrund ohne weitere Hilfsmittel, die am Gitter angreifen, nicht möglich ist.

Die Aufgabe der vorliegenden Erfindung liegt daher darin, ein Halteelement bereitzustellen, das die vorgenannten Nachteile vermeidet, und das über ein Setzgerät schnell montiert werden kann. Dieses wird erfindungsgemäss durch die in Anspruch 1 genannten Massnahmen erreicht.

Demnach weist der erste Schenkel einen ersten Schenkelteil, der das hakenförmige Ende des ersten Schenkels trägt, und einen zweiten Schenkelteil, an dem der erste Schenkelteil in Richtung einer Längsrichtung des ersten Schenkels teleskopierbar geführt ist, auf. Dabei ist zwischen dem ersten Schenkelteil und dem zweiten Schenkelteil ein Rastmechanismus zum Halten des ersten Schenkelteils am zweiten Schenkelteil in einer Position zueinander angeordnet. Durch diese Massnahme wird erreicht, dass das Halteelement mittels eines Setzgerätes in einem Arbeitsgang an einem Träger befestigt werden kann und aufgrund der Teleskopierbarkeit seines ersten Schenkels für verschieden hohe Gitter verwendet werden kann. Über den Rastmechanismus wird das Halteelement dann in der richtigen Länge des ersten Schenkels fixiert. Ein zusätzliches Hilfselement wird nicht mehr benötigt.

Günstig ist es, wenn das zweite Schenkelteil eine Führung mit zwei sich in Längsrichtung erstreckenden, parallel zueinander verlaufenden Führungsnuten aufweist, in denen Führungsabschnitte des ersten Schenkelteils geführt sind. Hierdurch sind beide Schenkelteile auf einfache Weise manuell teleskopierbar, da ein Verkanten der beiden Schenkelteile beim Zusammenschieben vermieden wird.

In einer preisgünstig herzustellenden Ausgestaltung der Erfindung, sind die Führungsnuten an sich gegenüberliegenden Seiten des zweiten Schenkelteils durch umgebördelte Kanten des zweiten Schenkelteils ausgebildet. Das Halteelement kann dabei als Blechteil hergestellt werden, das durch Stanzen und Biegen geformt wird.

Vorteilhaft weist der Rastmechanismus ein Rastmittel und wenigstens zwei Gegenrastmittel auf. Hierdurch kann der erste Schenkelteil in unterschiedlichen Positionen, die unterschiedlichen Längen des ersten Schenkels in dessen Längsrichtung entsprechen, am zweiten Schenkelteil gehalten werden.

Das Rastmittel ist dabei vorzugsweise als Schnapphaken ausgebildet, während die Gegenrastmittel als Raststege ausgebildet sind. Hierdurch wird eine Schnappverbindung geschaffen, die z. B. an Blechteilen auf einfache Weise durch Stanzen und Biegen ausgebildet werden kann.

Von Vorteil ist es ferner, wenn die Gegenrastmittel bzw. die Raststege an ihren dem hakenförmigen Ende zugewandten Seiten Schrägen zum Anheben des elastisch versetzbaren Rastmittels aufweisen. Hierdurch wird das Rastmittel bzw. der Schnapphaken bei einem Versetzen des ersten Schenkelteils gegen das zweite Schenkelteil an jedem Raststeg, gegen den es fährt, angehoben und kann an diesem vorbeilaufen.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
- Fig. 1: ein erfindungsgemässes Halteelement in perspektivischer Ansicht,
- Fig. 2: das Halteelement im Schnitt entlang der Linie II - II aus Fig. 1 in einem an einem Träger festgelegten Zustand.

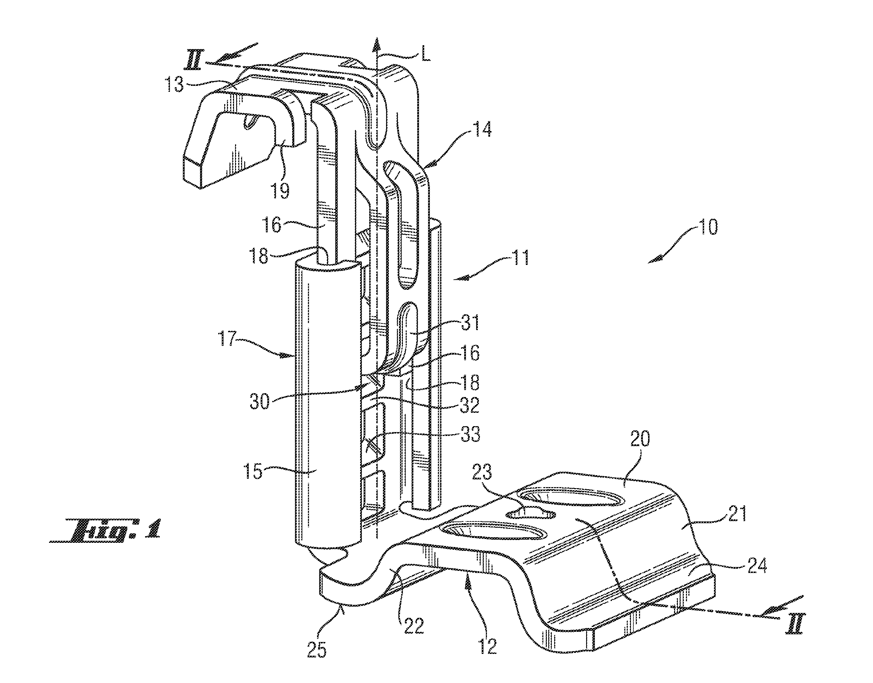

In den Figuren 1 bis 2 ist ein erfindungsgemässes Halteelement 10 in einem Ausführungsbeispiel dargestellt. Dieses Halteelement 10 weist einen ersten Schenkel 11 und einen zweiten Schenkel 12 auf, die beide ungefähr in einem rechten Winkel zueinander angeordnet sind. Der erste Schenkel 11 ist an seinem freien, oberen Ende 13 hakenförmig ausgebildet, um eine Strebe 51 eines Gitters 50 oder auch ein anderes an einem Träger 40 zu befestigendes Element zu umgreifen. Der erste Schenkel 11 weist ferner einen ersten Schenkelteil 14 und einen zweiten Schenkelteil 15 auf, an dem der erste Schenkelteil 14 in Richtung einer Längsrichtung L des ersten Schenkels 11 teleskopierbar geführt ist. Der zweite Schenkelteil 15 weist dazu eine insgesamt mit 17 bezeichnete Führung auf, die zwei seitlich an dem zweiten Schenkelteil 15 angeordnete und in Längsrichtung L verlaufende Führungsnuten 18 aufweist. In diesen Führungsnuten 18 sind an dem ersten Schenkelteil 14 angeordnete Führungsabschnitte 16 geführt. Die Führungsnuten 18 sind dabei an sich gegenüberliegenden Seiten des zweiten Schenkelteils 15 durch umgebördelte Kanten des zweiten Schenkelteils 15 ausgebildet.

Zwischen dem ersten und dem zweiten Schenkelteil 14, 15 ist ein Rastmechanismus 30 zum Fixieren des ersten Schenkelteils 14 relativ zum zweiten Schenkelteil 15 ausgebildet. Dieser Rastmechanismus 30 ist als Schnappverschluss ausgebildet, der auf Seiten des ersten Schenkelteils 14 ein als Schnapphaken ausgebildetes Rastmittel 31 und an dem zweiten Schenkelteil 15 ausgebildete Gegenrastmittel 32 aufweist, die als Raststege ausgebildet sind. Um verschiedene Rastpositionen zur Verfügung zu stellen, die unterschiedlichen Längen bzw. Höhen des ersten Schenkels in Längsrichtung L entsprechen, sind mehrere Gegenrastmittel 32 in Längsrichtung L hintereinander liegend am zweiten Schenkelteil 15 angeordnet. An den, dem hakenförmigen Ende 13 zugewandten Seiten der Gegenrastmittel 32 sind Schrägen 33 ausgebildet, die bei einem Einfahren des ersten Schenkelteils 14 in das zweite Schenkelteil 15 ein Vorbeilaufen des elastisch nachgebenden bzw. ausschwenkbaren Rastmittels 31 ermöglichen. Ein Auseinanderfahren der beiden Schenkelteile 14, 15 ist nur durch ein manuelles Ausschwenken bzw. Ausheben des als Schnapphaken ausgebildeten Rastmittels 31 aus seiner Rastposition an einem der Gegenrastmittel 32 möglich.

Von dem hakenförmigen Ende 13 in Richtung des zweiten Schenkelteils 15 abragende Vorsprünge 19 begrenzen den die Strebe 51 des Gitters 50 aufnehmenden Bereich des ersten Schenkelteils 14 zur Führung 17 hin.

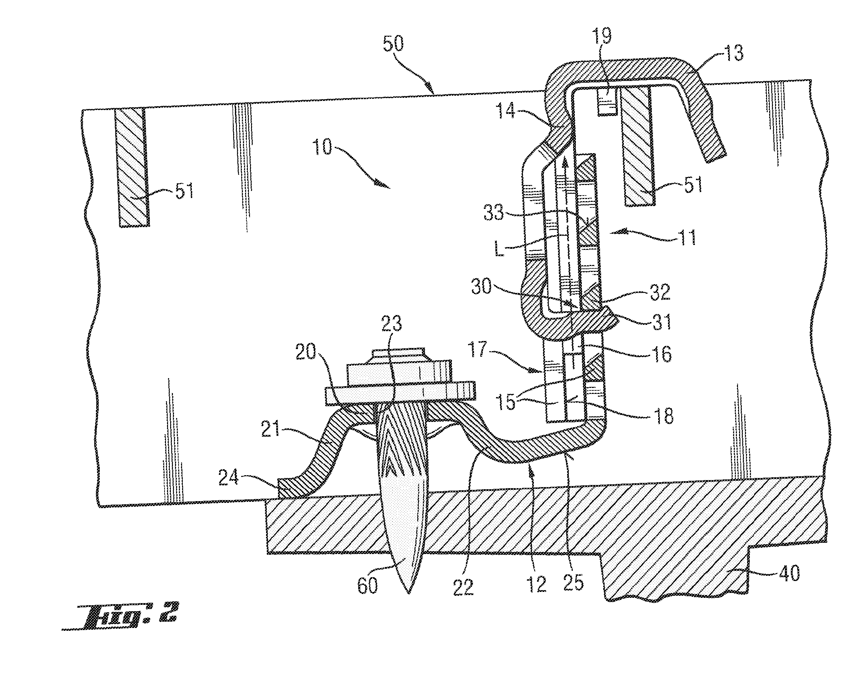

Der zweite Schenkel 12 bildet einen sattelförmigen Befestigungsabschnitt 20 aus, der eine Durchtrittsöffnung 23 für ein Befestigungselement 60 aufweist, das mittels eines in den Figuren 1 und 2 nicht dargestellten Setzgerätes in einen Untergrund, wie den in Fig. 2 dargestellten Träger 40, eingetrieben werden kann. An den Seiten abragend von dem Befestigungsabschnitt 20 sind ein erster und ein zweiter Fussabschnitt 21, 22 ausgebildet, wobei der erste Fussabschnitt 21 an seinem Endbereich 24 zur Ausbildung eines Anlagebereichs für den Untergrund umgebogen ist. Der zweite Fussabschnitt 22 ist an seinem dem Befestigungsabschnitt 20 abgewandten Endbereich ebenfalls umgebogen, und geht an dieser Umbiegung 25 direkt in den ersten Schenkel 11 des Halteelements 10 über.

Bei der Montage des Halteelementes 10 wird dieses mit dem hakenförmigen Ende 13 über einer Strebe 51 des Gitters 50 positioniert, während der Befestigungsabschnitt 20 des zweiten Schenkels 12 über einem Träger 40 positioniert wird. Mittels eines, z. B. über ein brennkraftbetriebenes Setzgerät gesetzten, Befestigungselementes 60 wird das Halteelement 10 dann an dem Träger 40 befestigt. Anschliessend wird das erste Schenkelteil 14 entlang der Führung 17 manuell soweit in das zweite Schenkelteil 15 gefahren, bis das hakenförmige Ende 13 und die Vorsprünge 19 die Strebe 51 umfassen. Das Rastmittel 31 schwenkt bei der Einfahrbewegung an den Schrägen 33 elastisch aus und fährt über diese hinweg. In seiner Endposition rastet das Rastmittel 31 schliesslich an einem der Gegenrastmittel 32 ein (vgl. Fig. 2). Das Gitter 50 ist nun über das Halteelement 10 sicher an dem Träger 40 gehalten.

## Patentansprüche

1. Halteelement für Gitter, mit einem ersten Schenkel (11), dessen wenigstens eines freies Ende (13) hakenförmig ausgebildet ist, und mit einem zweiten Schenkel (12), der einen Befestigungsabschnitt (20) aufweist, der eine Durchtrittsöffnung (23) für ein Befestigungselement (60), wie einen Nagel oder Bolzen aufweist,
**dadurch gekennzeichnet,**
**dass** der erste Schenkel (11) einen ersten Schenkelteil (14), der das hakenförmige Ende (13) des ersten Schenkels (11) trägt, und einen zweiten Schenkelteil (15), an dem der erste Schenkelteil (14) in Richtung einer Längsrichtung (L) des ersten Schenkels (11) teleskopierbar geführt ist, aufweist, wobei zwischen dem ersten Schenkelteil (14) und dem zweiten Schenkelteil (15) ein Rastmechanismus (30) zum Halten des ersten Schenkelteils (14) am zweiten Schenkelteil (15) angeordnet ist.

2. Halteelement nach Anspruch 1, **dadurch gekennzeichnet, dass** das zweite Schenkelteil (15) eine Führung (17) mit zwei sich in Längsrichtung (L) erstreckenden, parallel zueinander verlaufenden Führungsnuten (18) aufweist, in denen Führungsabschnitte (16) des ersten Schenkelteils (14) geführt sind.

3. Halteelement nach Anspruch 1 oder 2, **dadurch gekennzeichnet, dass** die Führungsnuten (18) an sich gegenüberliegenden Seiten des zweiten Schenkelteils (15) durch umgebördelte Kanten des zweiten Schenkelteils (15) ausgebildet sind.

4. Halteelement nach einem der Ansprüche 1 bis 3, **dadurch gekennzeichnet, dass** der Rastmechanismus (30) ein Rastmittel (31) und wenigstens zwei Gegenrastmittel (32) aufweist.

5. Halteelement nach Anspruch 4, **dadurch gekennzeichnet, dass** das Rastmittel (31) als Schnapphaken und die Gegenrastmittel (32) als Raststege ausgebildet sind.

6. Halteelement nach Anspruch 4 oder 5, **dadurch gekennzeichnet, dass** die Gegenrastmittel (32) an ihren dem hakenförmigen Ende (13) zugewandten Seiten Schrägen (33) zum Anheben des elastisch versetzbaren Rastmittels (31) aufweist.
